# EUROPÄISCHE PATENTANMELDUNG

(11) **EP 0 945 328 A2**
(43) Veröffentlichungstag der Anmeldung: **29.09.1999**
(21) Anmeldenummer: 99103820.9
(22) Anmeldetag: 27.02.1999
(51) Int. Cl.: B62D 21/15

(54) **Karosseriestruktur für den Frontbereich eines Kraftfahrzeuges**

(30) Priorität: 23.03.1998 DE 19812701
(71) Anmelder: Volkswagen Aktiengesellschaft, 38436 Wolfsburg (DE)
(72) Erfinder: Siegmund, Axel, Dipl.-Ing., 38518 Gifhorn (DE); Jandt, Thomas, Dipl.-Ing., 38102 Braunschweig (DE)

(57) **Zusammenfassung**

Karosseriestruktur für den Frontbereich eines Kraftfahrzeugs, umfassend Längsträger (2a, 2b) und wenigstens zwei vor dem Antriebsmotor gelegene, in Fahrtrichtung voneinander beabstandete Querträger (5, 6). Die Querträger (5, 6) können durch mindestens ein zentrales, etwa im Bereich der Fahrzeuglängsachse angeordnetes Deformationselement (41) miteinander verbunden sein. Alternativ oder zusätzlich dazu kann der in Fahrtrichtung hintere Querträger (6) über Mittel zur Motorlagerung verfügen.

## Beschreibung

Die vorliegende Erfindung betrifft eine Karosseriestruktur für den Frontbereich eines Kraftfahrzeugs, umfassend Längsträger und wenigstens zwei vor dem Antriebsmotor gelegene, in Fahrtrichtung voneinander beabstandete Querträger.

Neben fertigungstechnischen Erwägungen spielt bei der Konstruktion der Frontpartie eines Kraftfahrzeugs das Crash-Verhalten eine herausragende Rolle. Mit einer möglichst großen Energieabsorptionsfähigkeit durch plastische Verformung der Fahrzeugkarosserie im Bereich der Aufprallstelle soll die Beschädigung des Kraftfahrzeugs insgesamt gering gehalten werden. Bei langen und großen Fahrzeugkarosserien kann diesen beiden Forderungen durch genügend tief gestaltete Verformungszonen vor der eigentlichen Fahrgastzelle, somit in der Regel vor der A-Säule, Rechnung getragen werden. Durch eine von der Stoßstange bis zur A-Säule hin für plastische Verformung steifer werdende Karosserie, zum Beispiel durch explizite Deformationselemente möglichst weit im Frontbereich, können die Beschädigungen bei einem Crash mit niedriger Geschwindigkeit zudem gering gehalten werden.

Bei Fahrzeugen von relativ geringer Karosserielänge, insbesondere Kleinfahrzeugen, ist die zur plastischen Deformation geeignete Baulänge zwischen Stoßstange und A-Säule (Knautschzone) vergleichsweise gering. Speziell bei einem sogenannten Offset-Crash, bei dem das Fahrzeug nur mit einem Teil seiner Frontfläche auf ein Hindernis trifft, begrenzt die zur Verfügung stehende Bautiefe die Energieabsorptionsfähigkeit der Karosserie. In diesem Fall wird nur ein Teil des Frontbereichs deformiert und trägt zur Energieabsorption bei, so daß bereits bei relativ niedrigen Aufprallgeschwindigkeiten die gesamte zur Verfügung stehende Deformationstiefe genutzt wird.

Nach dem Stand der Technik üblich ist die Anbindung eines vor der Achse gelegenen Querträgers (sogenannter Stoßfängerquerträger) mittels Deformationselementen an die Längsträger. Speziell bei einem Offset-Crash wird in diesem Fall allerdings nur ein Deformationselement wirksam.

Weitere Karosserieteile, wie zum Beispiel eine verstärkte Kotflügelbank, als zusätzliche Deformationselemente zu nutzen, hat den Nachteil, daß oftmals relativ starke Blechabschnitte schräg zur Deformationsrichtung stehen und somit zum Abknicken und damit Versagen der Struktur führen.

Speziell zur Energieabsorption vorgesehene Elemente zwischen Stoßfängerquerträger und Karosserierahmen eines Fahrzeugs sind beispielsweise aus der DE 42 39 460 A1 bekannt. Ein Fahrzeugrahmen mit Energieabsorptionselementen im Bereich zwischen Fahrzeugfront und Fahrgastzelle ist aus der US 3,915,486 bekannt; die US 3,860,258 beschreibt eine Karosserierahmenanordnung mit zwei Längsträgern , die auch im Bereich der Fahrgastzelle Deformationsbereiche aufweist. Beiden Lösungen liegt das Problem zugrunde, die Energieabsorptionsfähigkeit der Karosserie zu erhöhen; sie nehmen jedoch in Kauf, Deformationselemente in weiten Bereichen des Karosserierahmens anzuordnen, wodurch entsprechend große Bereiche des Karosserierahmens im Falle eines Aufpralls auf ein Hindernis in Mitleidenschaft gezogen werden.

Eine Karosseriestruktur der eingangs genannten Art ist aus der DE 42 23 948 A1 bekannt. Dort werden zwei Längsträger frontseitig mit einer Anordnung aus einem Querträger und einem vor diesem angeordneten Stoßfängerquerträger als zweitem Querträger versehen, welche mit je einem in Verlängerung der Längsträger angeordneten Pralldämpfer verbunden sind. Vor der Montage dieser Anordnung ist der Motorraum frei zugänglich, so daß der Motor zuvor als Baugruppe von vorn eingesetzt werden kann. Diese Anordnung ermöglicht zwar eine vereinfachte Fertigung durch weitgehend vormontierte Baugruppen, bringt jedoch keine Verbesserung des Crashverhaltens der Karosserie.

Das der Erfindung zugrunde liegende Problem ist es, eine Karosseriestruktur der eingangs genannten Art für den Frontbereich eines Kraftfahrzeugs zu schaffen, die bei relativ geringer Bautiefe ein verbessertes Crashverhalten der Karosserie gewährleistet.

Dieses Problem wird erfindungsgemäß durch die kennzeichnenden Merkmale der Ansprüche 1 und 3 gelöst. Hierbei sind zwei vor der Vorderachse des Fahrzeugs angebrachte Querträger durch mindestens ein zentrales, etwa im Bereich der Fahrzeuglängsachse angeordnetes Deformationselement miteinander verbunden. Zusätzlich oder alternativ dazu kann der hintere Querträger über Mittel zur Motoraufnahme verfügen.

Durch die zumindest teilweise Trennung der für die kinetische Energie des Motors zur Verfügung stehenden Deformationsmittel (zentrales Deformationselement) von den für die kinetische Energie der Fahrzeugkarosserie zur Verfügung stehenden Deformationsmitteln (Deformationselemente in Verlängerung der Querträger), aber auch durch die mechanische beziehungsweise geometrische Verknüpfung der Deformationsmittel untereinander durch beide Querträger insbesondere bei einem Offset-Crash, wird die zur Deformation zur Verfügung stehende Tiefe des Frontbereichs des Fahrzeugs optimal ausgenutzt.

Besonders vorteilhaft ist die Anordnung der Längs- und Querträger sowie der diese jeweils verbindenden Deformationselemente in einer Ebene, da dann die Neigung zur Biegeverformung mit der Gefahr des Versagens bevor eine maximale plastische Verformung der Deformationselemente in Längsrichtung erreicht wurde vergleichsweise klein ist.

Vorteilhaft werden die Langsträger mit dem vorderen und hinteren Querträger mittels Längsträger-Deformationselementen verbunden, da auf diese Weise bei einem Aufprall, bei dem die Fahrzeugenergie nicht von vorgelagertem Stoßfänger bzw. zentralem Deformationselement absorbiert werden kann, die Längsträger nicht zwangsläufig deformiert werden.

Die Längsträger-Deformationselemente werden vorteilhaft über Verbindungselemente mit den Längsträgem verbunden, da in diesem Fall bei einer unfallbedingen Verformung der Längsträger-Deformationselemente ein vergleichsweise leichter Austausch der Frontpartie erfolgen kann.

Der hintere Querträger kann mit dem vorderen Querträger an dessen Verbindungsstelle mit den Längsträger-Deformationselementen verbunden sein, wobei wenigstens der vordere Querträger so gebogen ist, daß beide in der Mitte einen ausreichenden Abstand voneinander haben, um in diesen Abstand das zentrale Deformationselement einzubringen.

In einer alternativen Ausführungsform wird der zweite Querträger, der über eine gerade Seelenachse verfügen kann, statt an dem ersten Querträger in einem geeigneten Abstand zu diesem an den beiden Längsträger-Deformationselementen befestigt.

Der hintere Querträger kann in seinem Querschnitt an die Erfordernisse der Motorbefestigung sowie der Art der Befestigung an den Längsträger-Deformationselementen bzw. an dem vorderen Querträger, der als Stoßfängerquerträger ausgebildet sein kann, angepaßt sein. Insbesondere kann im mittleren Bereich eine Auswölbung nach hinten zur Anordnung von Mitteln zur Motoraufnahme vorgesehen sein.

Im folgenden wird die vorliegende Erfindung anhand von Ausführungsbeispielen unter Bezugnahme auf die beiliegenden Zeichnungen näher beschrieben. Dabei zeigen
- Fig. 1: eine schematische Explosionsansicht einer erfindungsgemäßen Karosseriestruktur im Vorderwagenbereich eines Kraftfahrzeuges;
- Fig. 2: eine schematische Darstellung der erfindungsgemäßen Karosseriestruktur gemäß Fig. 1;
- Fig. 3: eine schematische Explosionsansicht einer zweiten Ausführungsform der erfindungsgemäßen Karosseriestruktur.

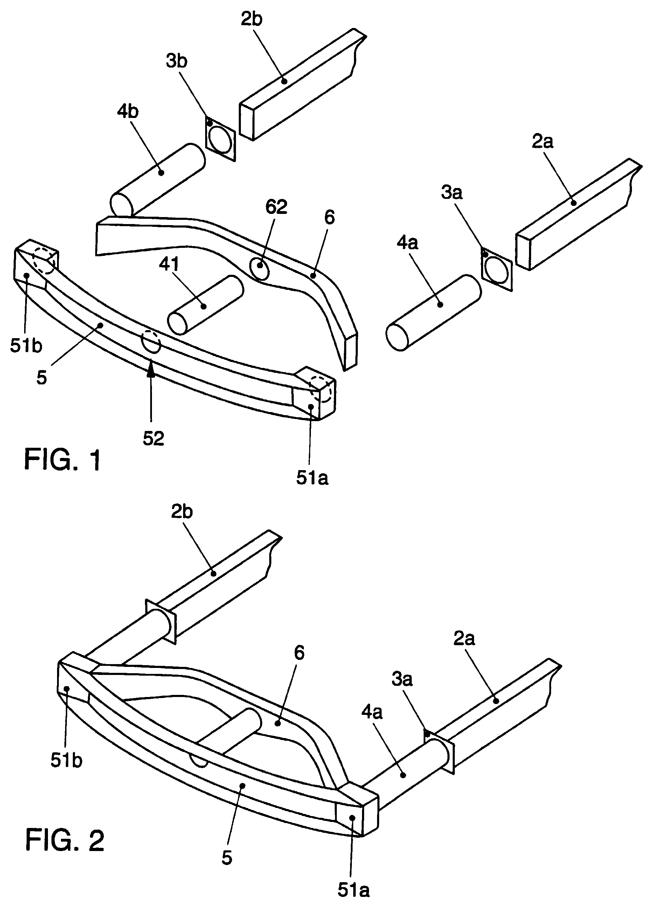

Die in Fig. 1 schematisch dargestellte Karosseriestruktur der Frontpartie eines Kraftfahrzeugs ist symmetrisch zur Fahrzeugmittelachse aufgebaut und umfaßt einen linken und einen rechten Längsträger 2a, 2b. An dem vorderen, fahrzeugfrontseitigen Kopf der Längsträger 2a, 2b ist mittels je eines Verbindungselements 3a, 3b jeweils ein Längsträger-Deformationselement 4a, 4b angebracht. Die Verbindung erfolgt durch Verschweißen, kann aber auch z.B. durch Verschrauben, Vernieten und/oder Verkleben erfolgen; in jedem Fall jedoch ist sie bevorzugt so ausgelegt, daß ein Abtrennen der Frontpartie an den Verbindungselementen 3a, 3b zum Beispiel zu Reparaturzwecken bei einem Unfallschaden der Frontpartie möglich ist.

Das linke und rechte Längsträger-Deformationselement 4a, 4b sind frontseitig durch einen als Stoßfängerquerträger ausgebildeten ersten Querträger 5 verbunden, welcher an seinen beiden Enden jeweils eine Halterung 51a, 51b zur Anbringung der Längsträger-Deformationselemente 4a, 4b aufweist. Die Verbindung zwischen den Halterungen 51a , 51b und den Längsträgerdeformationselementen 4a, 4b erfolgt vorzugsweise durch Verschweißen, kann aber ebenso z.B. als Schraubenverbindung ausgelegt sein.

In Fahrtrichtung gesehen hinter dem ersten Querträger 5 wird ein zweiter Querträger 6 zwischen linker und rechter Halterung 51a, 51b so angebracht, daß dieser in der von den beiden Längsträgern 2a, 2b und dem ersten Querträger 5 gebildeten Ebene liegt. Der erste Querträger 5 ist etwa einem Kreissegment folgend nach vorn herausgezogen, der zweite Querträger 6 zur Fahrzeugrückseite hin herausgewölbt, so daß beide etwa die Fläche einer einseitig deformierten Ellipse miteinander einschließen. Der zweite Querträger 6 verfügt über hier nicht dargestellte Mittel zur Motorlagerung, so daß bei einem Crash die Trägheitskräfte der Motormasse auf den zweiten Querträger einwirken.

Der erster und der zweite Querträger 5, 6 werden durch ein mittig zwischen den Längsträgern 2a, 2b angeordnetes zentrales Deformationselement 41 in Fahrzeuglängsrichtung miteinander verbunden. Eine weitere Verbindung des ersten Querträgers 5 mit dem zweiten Querträger 6 erfolgt vorzugsweise durch Verschweißen des zweiten Querträgers 6 mit den Halterungen 51a, 51b, wobei hier aber auch ein Verschrauben, Verkleben und/oder Vernieten möglich ist. Die Verbindung des zentralen Deformationselements 41 mit dem erstem Querträger 5 erfolgt mittels einer Schottplatte 52, die beispielsweise mit dem Deformationselement 41 verschweißt und mit dem Querträger 5 verschraubt ist. Die Verbindung des zentralen Deformationselements 41 mit dem zweiten Querträger 6 erfolgt mittels einer Deformationselementaufnahme 62, wobei beide Verbindungen als Schweißverbindung ausgeführt sein können. Alle Verbindungen können alternativ als Schrauben- und/oder Klebe- und/oder Nietverbindung ausgeführt sein.

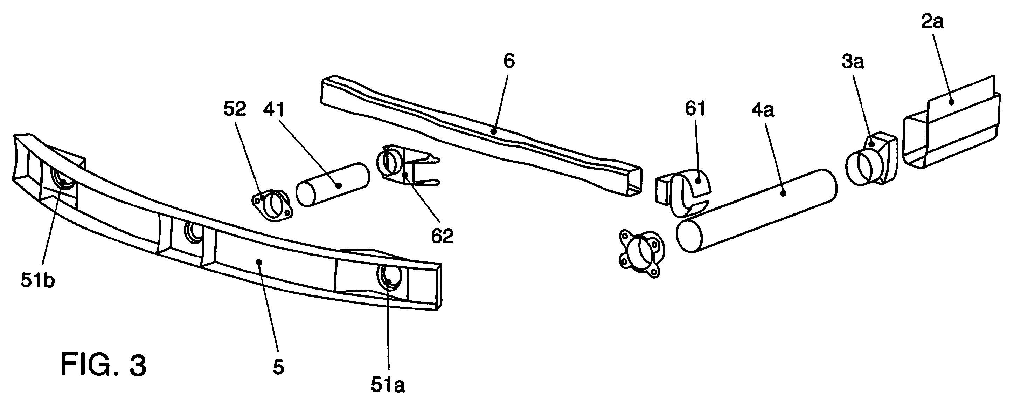

Fig. 3 zeigt eine zweite Ausführungsform der erfindungsgemäßen Anordnung. Im Unterschied zur ersten Ausführungsform ist der zweite Querträger 6 hier nicht mit dem ersten Querträger 5 über die Halterungen 51a, 51b verbunden, sondern im vorderen Bereich der Längsträger 2a, 2b an diesen selbst mittels einer schellenartigen Aufnahme 61 angebracht.

Weiterhin ist hier der zweite Querträger 6 als Hohlprofil mit bereichsweise unterschiedlichem Querschnitt und gerader Seelenachse ausgeführt, wodurch sich die Herstellung unter Inkaufnahme einer möglicherweise etwas geringeren Verformungsfestigkeit vereinfacht.

## Patentansprüche

1. Karosseriestruktur für den Frontbereich eines Kraftfahrzeugs, umfassend Längsträger (2a, 2b) und wenigstens zwei vor dem Antriebsmotor gelegene, in Fahrtrichtung voneinander beabstandete Querträger (5, 6), dadurch gekennzeichnet, daß die Querträger (5, 6) durch mindestens ein zentrales, etwa im Bereich der Fahrzeuglängsachse angeordnetes Deformationselement (41) miteinander verbunden sind.

2. Karosseriestruktur nach Anspruch 1, dadurch gekennzeichnet, daß der in Fahrtrichtung hintere Querträger (6) über Mittel zur Motorlagerung verfügt.

3. Karosseriestruktur nach dem Oberbegriff des Anspruchs 1, dadurch gekennzeichnet, daß der in Fahrtrichtung hintere Querträger (6) über Mittel zur Motortagerung verfügt.

4. Karosseriestruktur nach einem der Ansprüche 1 bis 3, dadurch gekennzeichnet, daß die Längsträger (2a, 2b), der vordere Querträger (5) und der hintere Querträger (6) in einer Ebene liegen.

5. Karosseriestruktur nach einem der Ansprüche 1 bis 4, dadurch gekennzeichnet, daß der vordere Querträger (5) mit den Längsträgern (2a, 2b) mittels Längsträger-Deformationselementen (4a, 4b) verbunden ist.

6. Karosseriestruktur nach Anspruch 5, dadurch gekennzeichnet, daß die Längsträger-Deformationselemente (4a, 4b) über Verbindungselemente (3a, 3b) mit den Längsträgern (2a, 2b) verbunden sind.

7. Karosseriestruktur nach einem der Ansprüche 1 bis 6, dadurch gekennzeichnet, daß der hintere Querträger (6) beidseitig mit Halterungen (51a, 51b) des vorderen Querträgers (5) verbunden ist.

8. Karosseriestruktur nach einem der Ansprüche 1 bis 6, dadurch gekennzeichnet, daß der hintere Querträger (6) über Aufnahmen (61) an den Längsträger-Deformationselementen (4a, 4b) befestigt ist.

9. Karosseriestruktur nach einem der Ansprüche 1 bis 8, dadurch gekennzeichnet, daß der hintere Querträger (6) als Hohlprofil mit gerader Seelenachse ausgeführt ist.

10. Karosseriestruktur nach einem der Ansprüche 1 bis 8, dadurch gekennzeichnet, daß der hintere Querträger (6) als Hohlprofil mit einer mittleren Auswölbung nach hinten ausgeführt ist.

11. Karosseriestruktur nach einem der Ansprüche 1 bis 10, dadurch gekennzeichnet, daß der in Fahrtrichtung vordere Querträger (5) als Stoßfängerquerträger ausgebildet ist.
